# EUROPEAN PATENT APPLICATION

(11) **EP 4 744 891 A1**
(43) Date of publication of application: **20.05.2026**
(21) Application number: 25213871.4
(22) Date of filing: 06.11.2025
(51) Int. Cl.: B32B 27/08, B32B 27/32

(54) **MULTI-LAYER FILM FOR A FEXIBLE POUCH AND RELATED MANUFACTURING METHOD**

(30) Priority: 19.11.2024 IT 202400026016
(71) Applicant: Matcare S.r.l., 20122 Milano (MI) (IT)
(72) Inventor: CATTANEO, Laura, I-20122 MILANO (IT)
(74) Representative: Genito, Elena

(57) **Abstract**

A method for manufacturing a multi-layer film comprises the following steps:
a) co-extruding at least a first molten polymer (61) and a second molten polymer (62) to form a primary film (2);
b) coating a polymer dispersion having oxygen barrier properties, for example an aqueous dispersion of PVOH or EVOH, onto the primary film (2) to produce a barrier layer (4);
c) casting a coating polymer onto the primary film (2) to produce a coating layer (3).

A multi-layer film comprises a primary film (2), a barrier layer (4) and a coating layer (3), said multi-layer film being free of adhesives. A flexible pouch has a body made from said multi-layer film.

## Description

### Field of Application

The present invention relates to a mono-material multi-layer film for flexible pouches, for example, but not exclusively, self-supporting flexible pouches (stand-up pouches), that is, flexible packages suitable for standing upright on their own, generally thanks to a gusseted base.

The present invention more generally refers to the field of materials used for the manufacturing of packaging, in particular, but not exclusively, for the food, pharmaceutical, cosmetic and detergent industries, that is, for containing products marketed by such industries, such as food, pharmaceutical, cosmetic and detergent products.

Flexible pouches are extremely widespread due to their practicality, thanks to their reduced bulk and the consequent reduction of storage and transport costs.

For the manufacturing of such packages, the use of multi-layer films is widespread due to the properties of such films, which combine flexibility, sealability, and barrier properties against humidity.

Generally, the structure of such multi-layer films is produced by laminates, which offer mechanical strength and protection against humidity and oxygen.

The term laminates refers to films comprising multiple layers of different materials, joined together through a lamination process. The lamination process combines these layers so that they work together to offer better overall performance than a single layer.

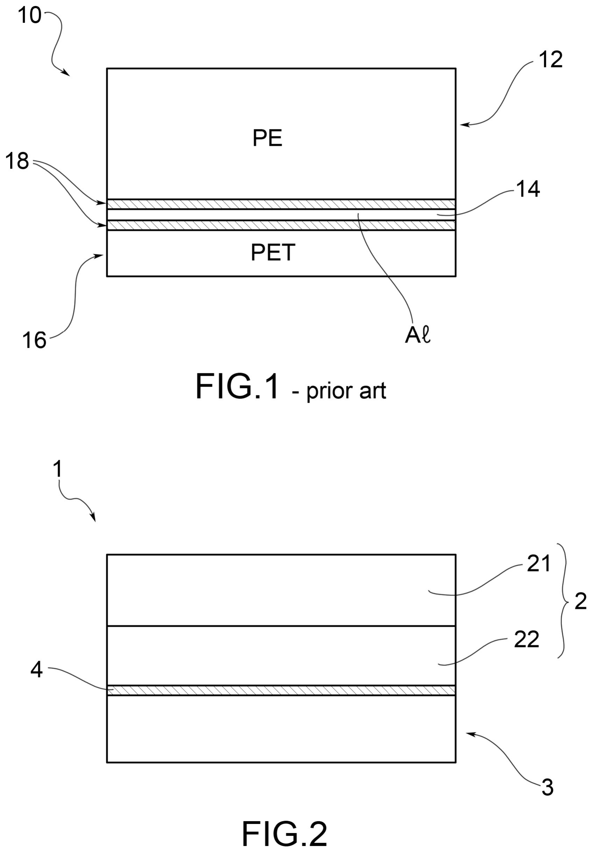

The most common structure of such laminates 10, illustrated for example in figure 1 annexed hereto, relating to the prior art, comprises a polyester (PET) layer 16 to provide rigidity and printability, an aluminium (Al) layer 14 to provide barrier properties against oxygen and humidity, and a polymer layer 12, generally polyethylene (PE) or polypropylene (PP), to provide sealability and flexibility.

These layers are laminated to form a multi-layer via the use of adhesives 18 interposed between said layers 12, 14, 16.

In other types of laminated multi-layer films, the barrier layer is a co-extruded layer comprising a polyethylene (PE) or polypropylene (PP) film co-extruded with a polymer that provides oxygen barrier properties, such as ethylene-vinyl alcohol (EVOH).

The manufacturing process by lamination commonly comprises the following steps:
- preparation of the various individual layers to be laminated;
- application of an adhesive layer on one or more of the layers;
- pressing of the various layers through rollers that press them together, exerting uniform pressure to ensure that the layers bond correctly;
- possible cooling and finishing; once laminated, the multi-layer is optionally cooled and finished, for example cut or wound.

Disadvantageously, such laminated multi-layer films have a large environmental impact, as they comprise highly different materials that must necessarily be disposed of separately, and they do not meet current requirements in terms of ecology and recyclability.

For these reasons, in recent years research has been oriented towards the use of mono-material multi-layer laminates, to improve recyclability and reduce environmental impact.

Disadvantageously, even mono-material multi-layer films are produced by lamination with the application of adhesives.

Adhesives play a crucial role in the manufacturing of such multi-layer films. Such adhesives may be solvent-based or solvent-free, depending on the specific needs of the final product.

Solvent-based adhesives are very versatile and provide strong adhesion, and for this reason are the most widely used.

Disadvantageously, however, there are concerns about such adhesives because of the presence of volatile solvents.

The main drawback concerns the environmental impact, since during application such adhesives release volatile organic compounds (VOCs) into the atmosphere, contributing to air pollution. Such adhesives also require well-ventilated working environments to ensure operator safety, since prolonged inhalation may cause health issues such as respiratory irritation, headaches, or even neurological damage.

In addition, there is the risk associated with the flammability of volatile solvents, which makes their storage and handling critical, increasing the risk of fire.

A further risk is the progressive evaporation of solvents during storage, even within closed containers, which may lead to product deterioration or premature hardening of the adhesive, reducing its useful life.

As a further disadvantage, even the disposal of residues of solvent-based adhesives involves difficulties, since they must be treated as hazardous waste, which adds costs and administrative complexity associated with their proper disposal.

Finally, environmental regulations are becoming increasingly strict regarding the use of volatile solvents, with legislation aimed at limiting their use in favour of more environmentally friendly solutions.

Consequently, industries are progressively moving towards water-based or solventless adhesives. Such water-based or solventless adhesives, while considered a more ecological solution compared with solvent-based adhesives, have some disadvantages.

One of the main drawbacks is their sensitivity to humidity. Water-based adhesives tend to lose effectiveness when exposed to conditions of high humidity or in contact with water.

Another issue concerns drying times. Since these adhesives must dry through water evaporation, the drying process may be slower compared with solvent-based adhesives, especially in environments with low temperatures or high humidity.

Disadvantageously, water-based adhesives also tend to have lower performance on surfaces that are difficult to bond, such as smooth plastic materials or oily surfaces. In such cases, they may not provide the same robust and durable adhesion offered by other adhesive solutions. Mechanical strength may also be lower in some applications, especially when adhesives must withstand high stresses or tension.

Finally, water-based adhesives require specific storage conditions to maintain their effectiveness. They must be stored at controlled temperatures to prevent degradation or freezing of the product.

Therefore, even mono-material multi-layer films are not sufficiently advanced in terms of recyclability and still present disposal challenges.

### Solution of the Invention

There is therefore a strong need to provide a multi-layer film capable of overcoming the typical drawbacks of the prior art.

In particular, the purpose of the present invention is to provide a multi-layer film that exhibits barrier properties and rigidity at least comparable to those offered by traditional multi-layer laminates, while at the same time meeting the increasing requirements in terms of recyclability.

This need is satisfied by a method for producing a multi-layer film according to claim 1, by a multi-layer film according to claim 6, and by a flexible pouch according to claim 13. The dependent claims describe preferred or advantageous embodiments of the invention, involving further advantageous aspects.

### Description of the Drawings

The features and advantages of the multi-layer film, of the manufacturing method and of the flexible pouch will in any case become evident from the description provided below of some preferred embodiments, given by way of example and not limitation, with reference to the annexed figures, in which:
- Figure 1 shows a multi-layer laminated film according to the prior art;
- Figure 2 shows a multi-layer film in one embodiment of the present invention;

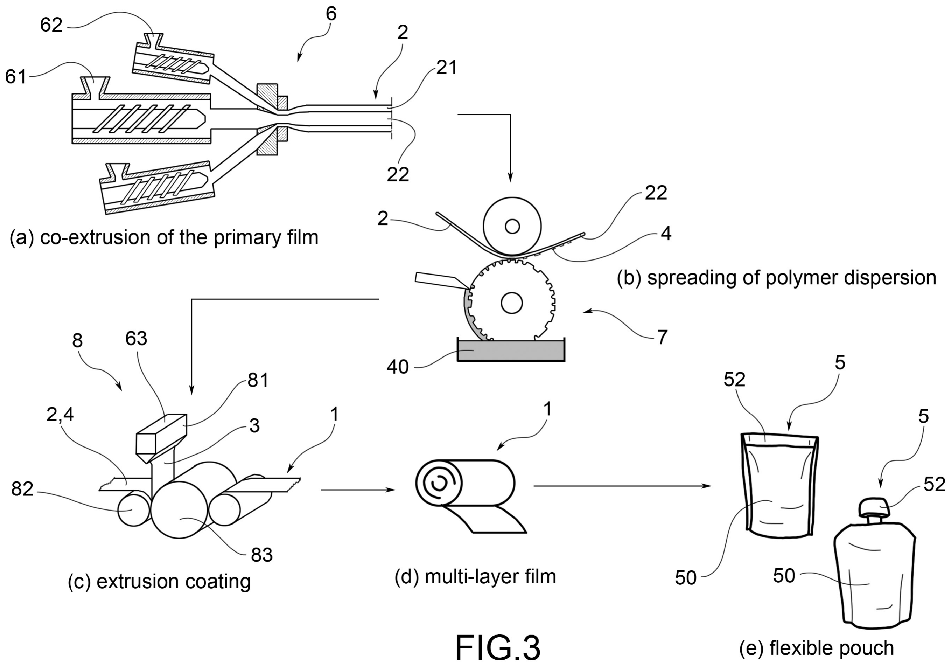

- Figure 3 shows a diagram of a method for producing a multi-layer film in one embodiment of the present invention.

### Detailed Description

With reference to the aforementioned figures, reference numeral 1 globally denotes a multi-layer film 1.

The multi-layer film 1 comprises a primary film 2 and a coating layer 3, between which a barrier layer 4 is interposed.

In one embodiment, the barrier layer 4 is intermediate between the primary film 2 and the coating layer 3 and is preferably directly in contact with said primary film 2 and said coating layer 3.

Preferably, the primary film 2 is a co-extruded multi-layer film, that is, obtained by co-extrusion.

In one embodiment, the primary film 2 is produced by cast co-extrusion (planar co-extrusion).

In cast co-extrusion, the molten material is extruded through a flat die and then spread onto a cooled roll, forming a flat primary film 2.

In one embodiment, the primary film 2 is produced by blown co-extrusion.

In blown co-extrusion, the molten material is extruded through an annular die and subsequently inflated into a bubble with air, creating a cylindrical primary film 2 that is then cooled and wound.

In an alternative embodiment, the primary film 2 is produced by extruding a molten polymer onto an already solid layer.

In one embodiment, the primary film 2 is mono-material.

In the present description, the term mono-material is intended to mean that the film comprises exclusively materials of the same category, suitable for being disposed of together, for example it comprises only materials of the same polyolefin, or comprises only materials of the polyethylene family, or only materials of the polypropylene family, except for impurities and except for the use of EVOH dispersions.

In one embodiment, impurity is intended to mean a substance foreign to those indicated, present in traces, that is, a material different from the indicated category, preferably in a percentage lower than 0.5% of the total, even more preferably lower than 0.1% of the total.

In one embodiment, the primary film is made of materials belonging to the same polyolefin family, preferably polyethylene (PE) or polypropylene (PP).

In one embodiment, the primary film 2 comprises only polyethylene.

In one embodiment, the primary film 2 comprises only polypropylene.

In one embodiment, the primary film 2 comprises only materials belonging to the polyethylene (PE) family, for example very low density polyethylene (VLDPE), low density polyethylene (LDPE), linear low density polyethylene (LLDPE), high density polyethylene (HDPE).

In one embodiment, the primary film 2 comprises only materials belonging to the polypropylene (PP) family, homopolymer or copolymer.

In one embodiment, the primary film 2 comprises a sealing layer 21 and a rigid layer 22.

In one embodiment, the primary film 2 further comprises auxiliary layers, for example made of recycled material.

In one embodiment, the primary film 2 is composed of a sealing layer 21 and of a rigid layer 22.

In one embodiment, the sealing layer 21 is characterized by a melting temperature lower than the other layers forming the primary film 2, for example, in particular, it has a melting temperature lower than the rigid layer 22.

In one embodiment, the sealing layer 21 is made of very low density polyethylene (VLDPE) or low density polyethylene (LDPE) or of a blend of very low density polyethylene (VLDPE), low density polyethylene (LDPE) and high density polyethylene (HDPE).

In one embodiment, the rigid layer 22 is made of high density polyethylene (HDPE) or linear low density polyethylene (LLDPE) or low density polyethylene (LDPE) or of a blend thereof.

In one embodiment, the multi-layer film 1 comprises a sealing layer 21 made of very low density polyethylene (VLDPE) and a rigid layer 22 made of high density polyethylene (HDPE).

Preferably, the sealing layer 21 constitutes between 5% and 20% of the primary film.

Preferably, the rigid layer 22 constitutes between 80% and 95% of the primary film.

One layer may also comprise an assembly of multiple sub-layers, formed so that they are indistinguishable from each other, preferably by co-extrusion of the same polymer.

In one embodiment, the primary film 2, preferably the rigid layer 22, and/or the barrier layer 4, are treated, preferably on the outer surface, to be printed with graphics and barrier coatings.

In one embodiment, the manufacturing method, described in detail in the continuation of this description, comprises a surface preparation step of the primary film 2 and/or of the barrier layer 4 to facilitate printing and coating.

In one embodiment, the surface preparation step of the primary film 2 and/or of the barrier layer 4 provides for the application of corona treatment, preferably on the outer surface.

Advantageously, corona treatment makes it possible to increase the adhesion of the outer surface of the primary film 2, preferably of the rigid layer 22, and/or of the barrier layer 4, making it more suitable to be printed or coated. Advantageously, this optimizes the subsequent steps of the manufacturing method.

Corona treatment uses a high-voltage electrical discharge to modify the chemical and physical properties of the material surface. The discharge creates an electric field between two electrodes and, when the plastic material passes through this field, its surface energy is increased, meaning that the surface becomes more receptive to bonds with other materials, improving its adhesion properties to prints and coatings and consequently the final performance of the product.

In one embodiment, the barrier layer 4 comprises polyvinyl alcohol (PVOH) and/or ethylene-vinyl alcohol (EVOH).

Preferably, the barrier layer 4 is produced by coating a polymer dispersion, preferably an aqueous or hydroalcoholic dispersion, of polyvinyl alcohol (PVOH) and/or ethylene-vinyl alcohol (EVOH), onto the primary film 2, preferably onto the rigid layer 22.

In a preferred embodiment, the primary film 1 comprises a barrier layer 4 preferably obtained from the application of an aqueous dispersion of polyvinyl alcohol (PVOH) and/or ethylene-vinyl alcohol (EVOH), interposed between the primary film 2 and the coating layer 3.

In one embodiment, the barrier layer 4 is created from a polymer dispersion applicable through a printing process, for example flexographic printing.

Advantageously, the barrier layer 4 acts as an oxygen barrier layer.

In one embodiment, the barrier layer 4 is produced by coating a polymer dispersion having oxygen barrier properties, preferably an aqueous or hydroalcoholic dispersion, preferably of polyvinyl alcohol (PVOH) and/or ethylene-vinyl alcohol (EVOH), onto the primary film 2, preferably on the side of the rigid layer 22, preferably by means of a printing apparatus, for example a flexographic printer or rotogravure or coating laminators.

In an advantageous embodiment, the multi-layer film 1 is free of adhesives.

Advantageously, therefore, in one embodiment the multi-layer film 1 is free of one or more or all of the adhesives selected from the group comprising: polyurethane adhesives, acrylic adhesives, vinyl adhesives, polyester adhesives.

In one embodiment, the coating layer 3 comprises high density polyethylene (HDPE), low density polyethylene (LDPE), or a blend of the two.

In one embodiment, the coating layer 3 is applied to the barrier layer 4 by extrusion coating.

In one embodiment, the multi-layer film 1 has an overall grammage between 80 g/m² and 200 g/m², including endpoints.

In one embodiment, the multi-layer film 1 comprises the primary film 2 and the coating layer 3 in a ratio between 9:1 and 1:1.

Preferably, said ratio refers to a transverse thickness ratio and/or a volume ratio.

In one embodiment, the barrier layer 4 has a thickness between 0.5 and 2 micrometres, preferably equal to 1 micrometre.

Also forming part of the present invention is a flexible pouch 5, for example a self-supporting pouch, for food, cosmetic or detergent industry, that is, suitable for containing a food and/or pharmaceutical and/or cosmetic and/or detergent product, comprising a body 50 made from a multi-layer film 1 according to an embodiment of the present invention.

Preferably, the body 50 is made of the multi-layer film 1 according to an embodiment of the present invention.

It is clear that the term body 50 refers to at least the portion of the flexible pouch suitable for coming into contact with the product contained therein, that is, at least the walls of the pouch itself. For example, a flexible pouch 5 comprises a body 50 and an opening or dispensing device 52, such as a tear opening, a zipper or gusset, or a dispensing cap.

Also forming part of the present invention is a manufacturing method a multi-layer film 1.

According to the invention, the manufacturing method comprises the following steps:
a) co-extruding at least a first molten polymer 61 and a second molten polymer 62 to form a primary film 2;
b) spreading a polymer dispersion 40, preferably aqueous or hydroalcoholic, having oxygen barrier properties, for example an aqueous dispersion of polyvinyl alcohol (PVOH) or ethylene-vinyl alcohol (EVOH), onto the primary film 2 to produce a barrier layer 4;
c) casting or extruding a coating polymer 63 onto the barrier layer 4 or onto the primary film 2 to produce a coating layer 3, said coating polymer 63 being preferably of the same family as the first molten polymer 61 and the second molten polymer 62.

It is clear that the method implicitly comprises the final step d): obtaining a multi-layer film 1 comprising said primary film 2, said barrier layer 4, and said coating layer 3.

In one embodiment, a method for producing a flexible pouch comprises the method for producing a multi-layer film according to an embodiment of the present invention, followed by a step e) of producing a flexible pouch.

Preferably, the coating polymer 63 is also in the molten state.

Preferably, step a) is carried out by means of a co-extrusion plant 6.

Preferably, said first molten polymer 61 and second molten polymer 62 are polyolefins belonging to the same family, for example to the polyethylene family.

In one embodiment, the coating polymer 63 is a polymer belonging to the same family as the first molten polymer 61 and the second molten polymer 62, for example to the polyethylene family.

In one embodiment, the first molten polymer 61 and the second molten polymer 62 are the same polymer.

Preferably, step b) is carried out by means of a printing apparatus 7, for example by flexographic printing, rotogravure or laminators.

Preferably, step c) is carried out by means of an extrusion coating plant 8.

In a preferred embodiment, the polymer dispersion is an aqueous dispersion or a hydroalcoholic dispersion.

In the present description, the expression polymer dispersion is intended to mean a colloidal system in which polymer particles are finely dispersed in a liquid phase, forming a stable suspension. In one embodiment, the liquid phase is preferably water (aqueous dispersion) or a mixture of water and alcohol (hydroalcoholic dispersion).

In a preferred embodiment, the polymer dispersion is an aqueous dispersion of polyvinyl alcohol (PVOH) or ethylene-vinyl alcohol (EVOH).

In one embodiment, the primary film 2 produced in step a) comprises a sealing layer 21 and a rigid layer 22, and in step b) the polymer dispersion is coated onto the rigid layer 22.

In one embodiment, the primary film 2 comprises a sealing layer 21 and a rigid layer 22, respectively made from the first molten polymer 61 and the second molten polymer 62.

In one embodiment, the sealing layer 21 is characterized by a melting temperature lower than that of the rigid layer 22.

In a preferred embodiment, in step b) the polymer dispersion is spread onto the rigid layer 22.

In one embodiment, therefore, in step c) the coating layer 3 is cast onto the primary film 2 at the rigid layer 22, above the barrier layer 4. That is, the barrier layer 4 remains interposed, directly in contact, between the primary film 2, on the side of the rigid layer 22, and the coating layer 3.

In one embodiment, the manufacturing method comprises step c) of coating the barrier layer 4 with a coating polymer 63, for example a high density polyethylene (HDPE), low density polyethylene (LDPE) or a blend of the two, to obtain the coating layer 3.

In one embodiment, step c) comprises the following sub-steps:
- unwinding the primary film 2 on which the barrier layer 4 has been spread towards an extrusion head 81;
- by means of the extrusion head 81, casting or extruding a coating polymer 63, preferably selected from high density polyethylene (HDPE) and/or low density polyethylene (LDPE) and/or a blend of the two, onto the surface of the barrier layer 4, to obtain the coating layer 3;
- by means of a transport system 82, bringing the primary film 2 spread with the barrier layer 4 and covered with the coating layer 3 under a pressing roller 83;
- by means of the pressing roller 83, pressing and optionally cooling the primary film 2 and the barrier layer 4 against the coating layer 3 to make them adhere to one another.

Advantageously, producing the coating layer 3 by extruding the coating polymer 63 directly onto the barrier layer 4, optionally with the primary film 2 already printed with graphics above and/or below the barrier layer 4, makes it possible to protect the printed graphic, make it glossy, and allow the material to be sealed onto itself by applying heat directly in contact with the coating layer 3, without risking damage to the printed graphic.

In one embodiment, the method comprises, after step b), a graphic printing step b1) which includes printing a graphic onto the barrier layer 4.

In one embodiment, in step c) the coating layer 3 is applied onto the barrier layer 4 above said graphic.

In an alternative embodiment, the method comprises, prior to step b), a graphic printing step a1) which includes printing a graphic onto the primary film 2, and in step b) the barrier layer 4 is spread onto the primary film 2, preferably on the side of the rigid layer 22, above said graphic.

In one embodiment, the manufacturing method comprises, before step b) or step a1), a surface preparation step b0) of the primary film 2, suitable for making the primary film 2 ready to receive printing in step b) or the graphic in step a1). Preferably, said step b0) includes applying corona treatment to the primary film 2.

In one embodiment, the manufacturing method comprises, before step b1), a surface preparation step b01) of the barrier layer 4, preferably by applying corona treatment, suitable for making the barrier layer ready to receive a graphic in step b1).

Innovatively, the present invention solves the drawbacks of multi-layer films for flexible pouches typical of the prior art.

Advantageously, the multi-layer film according to the present invention is mono-material and free of adhesives and therefore easily recyclable.

According to a further advantage, the co-extrusion process makes it possible to form different layers in a single step and allows combining the properties of different polymers in a single film, optimizing the characteristics of the final product.

Advantageously, co-extrusion allows reducing manufacturing times and operating costs, since the multi-layer can be produced in a single manufacturing step, unlike lamination, which requires each layer to be produced separately and then glued and pressed together.

According to a further advantage, the manufacturing method according to the present invention makes it possible to combine materials without the use of adhesives, which reduces resource consumption and avoids the problems associated with the use of adhesives required in the lamination process, in particular the problems linked to recyclability.

According to a further advantage, the method according to the present invention ensures better adhesion of the layers, which are joined while still in the molten state, creating a stronger and more homogeneous bond between the materials, compared with lamination, where reliance is placed on adhesives that may loose effectiveness over time. Consequently, the risk of delamination between them is avoided.

It is clear that, to the embodiments of the above-mentioned multi-layer film and the related manufacturing method, a person skilled in the art, in order to meet specific requirements, may introduce variants or replace elements with other functionally equivalent ones.

Such variants are also encompassed within the scope of protection as defined by the following claims. Moreover, each variant described as belonging to a possible embodiment can be implemented independently of the other variants described.

## Claims

1. A method for manufacturing a multi-layer film (1) comprising the following steps:
a) co-extruding at least a first molten polymer (61) and a second molten polymer (62), to form a primary film (2);
b) spreading a preferably aqueous or hydroalcoholic polymer dispersion having oxygen barrier properties, for example an aqueous dispersion of polyvinyl alcohol (PVOH) or ethylene-vinyl alcohol (EVOH), on the primary film (2) to make a barrier layer (4);
c) casting or extruding a coating polymer (63) onto the barrier layer (4) or the primary film (1) to make a coating layer (3).

2. Method according to claim 1, wherein the first molten polymer (61) and the second molten polymer (62) coextruded in step a) are polyolefins belonging to the same family, for example the polyethylene family, and wherein the coating polymer (63) is a polymer belonging to the same family as the first molten polymer (61) and the second molten polymer (62).

3. Method according to claim 1 or 2, wherein the primary film (2) comprises a sealing layer (21) and a rigid layer (22), made of the first molten polymer (61) and the second molten polymer (62), respectively, wherein the sealing layer (21) is **characterized by** a melting temperature which is lower than the rigid layer (22), and wherein in step b) the polymer dispersion is spread on the rigid layer (22).

4. Method according to any one of the preceding claims, comprising after step b), a graphic printing step b1) which includes printing a graphic on the barrier layer (4).

5. Method according to any one of the preceding claims, comprising before step b), a step b0) of surface preparation of the primary film (2) comprising the application of corona treatment to the primary film (2).

6. A multi-layer film (1) comprising:
- a primary film (2), a coating layer (3), and a barrier layer (4) having oxygen barrier properties interposed between said primary film (2) and said coating layer (3),
said multi-layer film (1) being **characterized in that** it has no adhesives.

7. Multi-layer film (1) according to claim 6, obtained by the method according to any one of claims 1 to 5.

8. Multi-layer film (1) according to claim 6 or 7, wherein the primary film (2) consists of materials belonging to the polyethylene (PE) family, for example very low density polyethylene (VLDPE), low density polyethylene (LDPE), linear low density polyethylene (LLDPE), high density polyethylene (HDPE).

9. Multi-layer film (1) according to any one of claims 6 to 8, wherein the primary film (2) comprises a sealing layer (21) and a rigid layer (22), wherein the sealing layer (21) is **characterized by** a melting temperature which is lower than the rigid layer (22).

10. Multi-layer film (1) according to any one of claims 6 to 9, wherein the barrier layer (4) has a thickness between 0.5 and 2 micrometers, preferably equal to 1 micrometer.

11. Multi-layer film (1) according to any one of claims 6 to 10, having an overall grammage between 80g/m2 and 200g/m2, including endpoints.

12. Multi-layer film (1) according to any one of claims 6 to 11, wherein the primary film (2) and the coating layer (3) are at a ratio between 9:1 and 1:1.

13. A flexible pouch (5), for example a self-supporting flexible pouch, suitable for containing a food and/or pharmaceutical and/or cosmetic and/or detergent product, comprising a body (50) made from a multi-layer film (1) according to any one of claims 6 to 12.
